# EUROPEAN PATENT APPLICATION

(11) **EP 4 714 548 A1**
(43) Date of publication of application: **25.03.2026**
(21) Application number: 25203702.3
(22) Date of filing: 22.09.2025
(51) Int. Cl.: B02C 7/14, D21D 1/00, D21D 1/30

(54) **MEASUREMENT SYSTEM AND METHOD FOR MONITORING GAP ADJUSTMENT MECHANISM**

(30) Priority: 23.09.2024 US 202463697939 P
(71) Applicant: Valmet Technologies Oy, 02150 Espoo (FI)
(72) Inventor: Kettunen, Heikki, 01370 Vantaa (FI); Kovanen, Risto, 40700 Jyväskylä (FI); Otsasson, Jani, 33710 Tampere (FI); Short, Robert, Antrim, NH, 03440 (US); Viitaharju, Jarmo, 33710 Tampere (FI); Virtanen, Jukka A, 37601 Valkeakoski (FI)
(74) Representative: Kolster Oy Ab

(57) **Abstract**

A measurement system for monitoring a gap adjustment mechanism of a processing device. The processing device comprises oppositely positioned processing elements with a gap between them. The measurement system comprises a first measuring device to measure information describing a position of that processing element which is moved by at least one actuating unit of the gap adjustment mechanism for adjusting the size of the gap, and at least one second measuring device to measure information describing a position of the at least one actuating unit. The measurement system further comprises a data processing device configurable to determine the condition of the gap adjustment mechanism based on the information describing the position of the processing element and the information describing the position of the at least one actuating unit.

Additionally, a method for monitoring a condition of a gap adjustment mechanism of a processing device.

## Description

### FIELD OF THE INVENTION

The present invention relates to a measurement system and a method for monitoring condition of a gap adjustment mechanism of a processing device, which processing device comprises oppositely positioned processing elements with a gap between the processing elements.

### BACKGROUND OF THE INVENTION

There is a wide variety of processing devices which comprise oppositely positioned processing elements for processing material supplied into a gap between the processing elements. If for example a processing of fibrous material is considered, these processing devices include for example refiners, dispergers, and deflakers that are configured to treat or process pulp, which is typically a mixture including fibres, water and possibly some additives.

In a refiner, fibres in the fibrous material are treated to have suitable properties for forming a continuous fibre material web with desired characteristics. In a disperger, the fibrous material is treated to detach from the fibres different contaminants attached to the fibres and to make the detached contaminants smaller so that they can be easily removed from the pulp in a flotation stage following the dispersing or, alternatively, to prevent them being visible in a finished fibrous material web at least by visual examination. In a deflaker, the fibrous material is treated to detach the fibres from each other.

The devices mentioned above have similar basic construction with at least two oppositely positioned processing elements, wherein at least one of the processing elements is arranged to rotate relative to at least one another processing element. Between the oppositely positioned processing elements there is a narrow free space, i.e. a gap, wherein the fibrous material to be fed into the processing device is treated.

The size of the gap, i.e., a free distance between the opposing processing elements, is adjusted for providing a desired treatment effect to the fibrous material. The gap in the processing device is adjusted by a gap adjustment mechanism. The gap adjustment mechanism comprises an actuating unit coupled in connection with that processing element that is intended to be moved in respect of the other processing element for adjusting the size of the gap between the processing elements. A reliably operating gap adjustment mechanism is thus a prerequisite for an accurate adjustment of the size of the gap.

A problem relating to a reliable operation of the gap adjustment mechanism is wear of the gap adjustment mechanism. The wear of the gap adjustment mechanism causes extra clearance in the mechanism. This extra clearance makes the precise operation of the gap adjustment mechanism difficult. First it looks like the processing element intended to be moved does not move at all, and then suddenly the movement is too large.

The clearance can be measured at shutdown as a separate service work. However, a possibly wrong size of the gap due to an unreliable operation of the gap adjustment mechanism may cause undesired characteristics of the treated fibrous material between the shutdowns.

Therefore, there is a need for an improved solution to monitor the condition of the gap adjustment mechanism.

### BRIEF DESCRIPTION OF THE INVENTION

An object of the present invention is to provide a novel measurement system and a novel method for monitoring condition of a gap adjustment mechanism in a processing device.

The invention is characterized by the features of the independent claims.

The invention is based on the idea of comparing, as a response to the operation of the at least one actuating unit to move the processing element coupled to the at least one actuating unit for adjusting the size of the gap, the information describing the position of the processing element intended to be moved and the information describing the position of the at least one actuating unit. A specific position of the at least one actuating unit typically corresponds to a specific position of the processing element intended to be moved by the at least one actuating unit. Any deviation between the expected position of the processing element intended to be moved and the respective operation of the at least one actuating unit may indicate a failure in the operation of the gap adjustment mechanism.

An advantage of the invention is that the condition of the gap adjustment mechanism of the processing device may be monitored also during the operation of the processing device based on measurements available as a response to the operation of the gap adjustment mechanism. A characteristic representing a condition of the gap adjustment mechanism is wear of the gap adjustment mechanism, whereby an indicator of the wear in the gap adjustment mechanism is a clearance or extra clearance in the gap adjustment mechanism. The presence of the clearance or extra clearance as such, or an amount of the clearance, may be utilized to plan future maintenance operations to be taken for the gap adjustment mechanism.

A parameter indicating the wear of the gap adjustment mechanism, such as an amount of the clearance or an amount of the extra clearance in the gap adjustment mechanism, may also be used as one control parameter in the adjustment of the size of the gap. This allows the adjustment of the size of the gap in the processing device, when considering the operation of the gap adjustment mechanism, such that the intended size of the gap may be maintained during the operation of the processing device despite of the wear appearing in the gap adjustment mechanism.

Some embodiments of the invention are disclosed in the dependent claims.

### BRIEF DESCRIPTION OF THE DRAWINGS

In the following the invention will be described in greater detail by means of preferred embodiments with reference to the accompanying drawings, in which
Figure 1 shows schematically a side view of a processing device partly in cross-section;
Figure 2 shows schematically a measurement system for monitoring a condition of a gap adjustment mechanism of a processing device;
Figure 3 shows schematically a method for monitoring a condition of a gap adjustment mechanism of a processing device;
Figure 4 shows schematically another measurement system for monitoring a condition of a gap adjustment mechanism of a processing device; and
Figure 5 shows schematically a detail of a measurement system for monitoring a condition of a gap adjustment mechanism of a processing device.

For the sake of clarity, the figures show some embodiments of the invention in a simplified manner. Like reference numerals identify like elements in the figures.

### DETAILED DESCRIPTION OF THE INVENTION

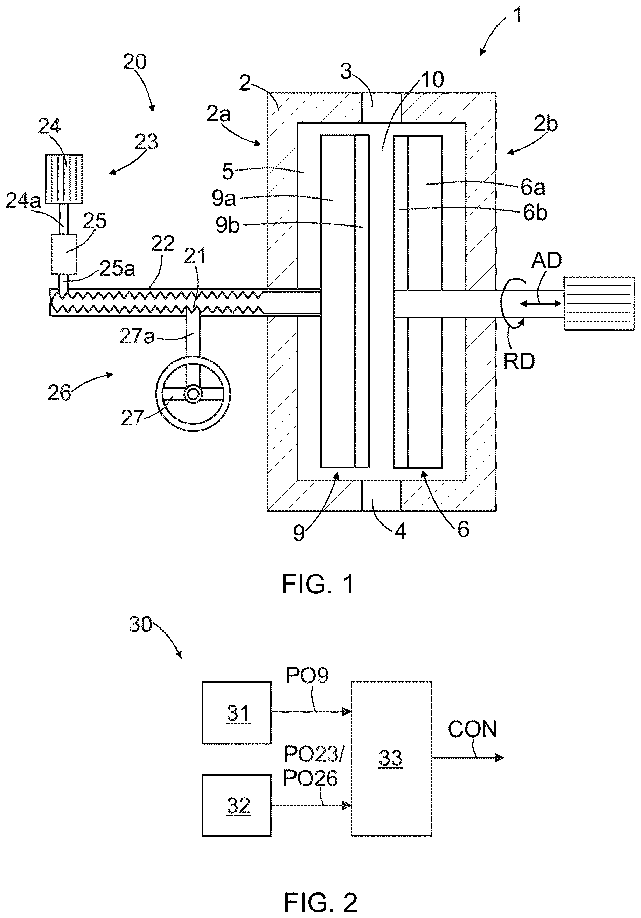

Figure 1 is a schematic side view of a processing device 1 partly in cross-section. The processing device 1 comprises a frame 2. The frame 2 has a first end 2a and a second end 2b opposite to the first end 2a in an axial direction AD of the processing device 1. The frame 2 comprises at least one inlet 3 through which material to be processed in the processing device 1 may be fed into the processing device 1. The frame 2 also comprises at least one outlet 4 through which the material already processed in the processing device 1 may be discharged out of the processing device 1. The frame 2 contributes to define a chamber 5 for accommodating substantially oppositely positioned processing elements that are arranged to direct an intended processing effect to the material to be processed in the processing device 1.

The processing device 1 comprises a rotatable processing element 6, i.e., a rotor 6. The rotor 6 is connected to a shaft 7 that extends substantially in the axial direction AD of the processing device 1. The shaft 7 is connected to a main motor 8 of the processing device 1. The main motor 8 is arranged to rotate the shaft 7 and, by the shaft 7, the rotor 6 about a central axis of the rotor 6 for example in a rotation direction indicated with an arrow RD in Figure 1.

The rotor 6 comprises a backing plate 6a that forms a frame of the rotor 6. The rotor 6 further comprises a processing surface 6b arranged to subject intended processing effect to the material to be processed in the processing device 1 when the rotor 6 is operated. The processing surface 6b is typically implemented with several replaceable segments fastened to the backing plate 6a.

The processing device 1 further comprises a stationary processing element 9, i.e., a stator 9. The stator 9 is supported in the processing device 1 in such a manner that it is stationary in a circumferential direction, meaning that the stator 9 cannot move or rotate about a central axis of the stator 9.

The stator 9 comprises a backing plate 9a that forms a frame of the stator 9. The stator 9 further comprises a processing surface 9b arranged to subject intended processing effect to the material to be processed in the processing device 1 when the rotor 6 is operated. The processing surface 9b is typically implemented with several replaceable segments fastened to the backing plate 9a.

The rotor 6 and the stator 9 are arranged substantially opposite to each other such that the processing surface 6a of the rotor 6 faces towards the processing surface 9b of the stator 9. Between the processing surface 6a of the rotor 6 and the processing surface 9b of the stator 9 there is a gap 10, i.e., a small free volume, wherein the material to be fed into the processing device 1 is processed. The size of the gap 10, i.e., a distance between the processing surface 6a of the rotor 6 and the processing surface 9b of the stator 9, is highly exaggerated relative to the rotor 6 and the stator 9. In practice, the size of the gap depends on the material to be processed and the processing effect intended to be directed to the material to be processed.

The processing device 1 in Figure 1 comprises a single rotatable processing element 6 and a single stationary processing element 9. However, the number of the rotatable and stationary processing elements in a processing device may vary according to an intended use of the processing device.

The rotatable 6 and stationary 9 processing elements of the processing device 1 in Figure 1 are disc-shaped. However, the shape of the processing elements may vary. Therefore, according to an embodiment of the processing device, the processing elements of the processing device may be cone-shaped.

According to an example embodiment, the material to be processed in the processing device 1 is fibrous material. The fibrous material has typically a form of pulp, i.e., a mixture including fibres, water and possibly some additives.

Some processing devices intended to process the fibrous material include for example different kind of refiners, dispergers, and deflakers. In refiners, fibres in the fibrous material are treated to have suitable properties for forming a continuous fibre material web with desired characteristics. In dispergers, the fibrous material is treated to detach from the fibres different contaminants attached to the fibres and to make the detached contaminants smaller so that they can be easily removed from the pulp in a flotation stage following the dispersing or, alternatively, to prevent them being visible in a finished fibrous material web at least by visual examination. In deflakers, the fibrous material is treated to detach the fibres from each other.

The processing device 1 in Figure 1 further comprises a gap adjustment mechanism 20. Generally, the gap adjustment mechanism 20 in a processing device is intended to adjust a size of the gap between the processing elements i.e., for adjusting a free distance between the processing surfaces of the processing elements. For implementing that, the gap adjustment mechanism 20 is coupled in connection with a processing element of the processing device to move the processing element in respect of another processing element of the processing device for adjusting a size of the gap between the processing elements. For decreasing the size of the gap 10 between the processing elements, the processing element coupled to the gap adjustment mechanism 20 is moved towards the other processing element. Correspondingly, for increasing the size of the gap 10 between the processing elements, the processing element coupled to the gap adjustment mechanism 20 is moved away from the other processing element. In the embodiment of the processing device 1 shown in Figure 1 the gap adjustment mechanism 20 is coupled in connection with the stator 9 to move the stator 9 in respect of the rotor 6 for adjusting the size of the gap 10 between the stator 9 and the rotor 6, i.e., for adjusting a free distance between the processing surfaces 6b, 9b of the rotor 6 and the stator 9.

The gap adjustment mechanism 20 comprises a coupling element 21 extending in the axial direction AD of the processing device. The coupling element 21 is coupled to the stator 9, to be more exact, to the backing plate 9a of the stator 9. A movement of the coupling element 21 in the axial direction AD of the processing device 1 will provide a movement of the stator 9 in the axial direction AD of the processing device 1, thereby causing a change in the size of the gap 10. The coupling element 21 in Figure 1 comprises a toothed bar, but other implementations of the coupling element 21 are possible. The coupling element 21 is encapsulated inside a casing 22 to protect the coupling element 21 from the external environment.

The gap adjustment mechanism 20 in Figure 1 further comprises two actuating units, i.e., a first actuating unit 23 and a second actuating unit 26, that are coupled to the coupling element 21 to operate the coupling element 21 to move the stator 9 for adjusting the size of the gap 10. The first actuating unit 23 and the second actuating unit 26 are separate from each other such that both actuating units 23, 26 can be separately used to operate the coupling element 21 for adjusting the size of the gap 10. Both actuating units 23, 26 may, however, be coupled with the coupling element 21 at the same time, in which case the actuating units 23, 26 are coupled in connection with each other via the coupling element 21. In that case, the operation of one actuating unit 21 to operate the coupling element 21 may also cause a similar operation in the other actuating unit as well.

The first actuating unit 23 comprises an electric motor 24 and a gear box 25. The motor 24 is coupled with the gear box 25 via a shaft 24a of the motor 24 to operate the gear box 25. The gear box 25, in turn, is coupled with the coupling element 21 via a shaft 25a of the gear box 25 to operate the coupling element 21, when the motor 24 receives a respective control signal to operate for adjusting the size of the gap 10. The gear box 25 may comprise a neutral gear or a disconnector to decouple the gear box 25 from the coupling element 21.

The second actuating unit 26 comprises a manually operable adjustment wheel 27. The adjustment wheel 27, in turn, is coupled with the coupling element 21 via a shaft 27a of the adjustment wheel 27 to operate the coupling element 21, when the adjustment wheel 27 is turned for adjusting the size of the gap 10.

If the second actuating unit 26 is available, the adjustment wheel 27 is typically all the time coupled with the coupling element 21 via the shaft 27a of the adjustment wheel 27. In that case, if the neutral gear or the disconnector of the gear box 25 is not applied, both the first actuating unit 23 and the second actuating unit 26 are coupled with the coupling element 21 at the same time.

In contrast to the embodiment shown in Figure 1, the gap adjustment mechanism 20 may comprise only one of the actuating units 23, 26 shown in Figure 1. Generally, in a processing device comprising a gap adjustment mechanism, the gap adjustment mechanism may comprise only one actuating unit to move a processing element of the processing device for adjusting a size of a gap between oppositely positioned processing elements.

A problem relating to a reliable operation of the gap adjustment mechanism 20 is wear of the gap adjustment mechanism 20. The wear of the gap adjustment mechanism causes clearance in the mechanism 20. The clearance of the gap adjustment mechanism is therefore one factor that indicates the condition of the gap adjustment mechanism 20. The clearance provides a measure for the wear of the gap adjustment mechanism 20. This extra clearance makes the precise operation of the gap adjustment mechanism 20 difficult, possibly preventing an accurate adjustment of the gap 10. First it looks like the processing element intended to be moved does not move at all, and then suddenly the movement is too large. The wear of the gap adjustment mechanism 20 may occur for example in the gear box 25, in the coupling between the shaft 25a of the gear box 25 and the coupling element 21, in the coupling between the shaft 27a of the adjustment wheel 27 and the coupling element 21, and/or in the coupling element 21.

Another factor relating to the condition of the gap adjustment mechanism 20 is an ability of the gap adjustment mechanism 20 to operate, i.e., whether the gap adjustment mechanism 20 can at all move the processing element for adjusting the size of the gap 10. If the gap adjustment mechanism cannot at all move the processing element for adjusting the size of the gap 10, this may be an indication of a mechanical or an electrical failure in the gap adjustment mechanism 20.

The measurement system for monitoring a condition of a gap adjustment mechanism of a processing device comprises a first measuring device to measure information describing a position of that processing element which is moved by at least one actuating unit of the gap adjustment mechanism for adjusting the size of the gap. The measurement system further comprises at least one second measuring device to measure information describing a position of the at least one actuating unit, and a data processing device configurable to determine the condition of the gap adjustment mechanism based on the information describing the position of the processing element moved by the at least one actuating unit and the information describing the position of the at least one actuating unit.

Figure 2 shows schematically a measurement system 30 for monitoring a condition of a gap adjustment mechanism 20 of a processing device 1.

The measurement system 30 of Figure 2 comprises a first measuring device 31 to measure information describing a position of that processing element which is moved by at least one actuating unit of the gap adjustment mechanism for adjusting the size of the gap. Referring to the example of the processing device 1 shown in Figure 1, the first measuring device 31 is arranged to measure information describing the position PO9 of the stator 9 moved by at least one of the first actuating unit 23 or the second actuating unit 26.

The measurement system 30 of Figure 2 further comprises at least one second measuring device 32 to measure information describing a position of the at least one actuating unit. Referring to the example of the processing device 1 shown in Figure 1, the second measuring device 32 is arranged to measure information describing the position PO23 of the first actuating unit 23 or the position PO26 of the second actuating unit 26. According to an embodiment, the measurement system 30 may comprise two pieces of the second measuring devices 32, i.e., one second measuring device 32 to measure information describing the position PO23 of the first actuating unit 23 and another second measuring device 32 to measure the position PO26 of the second actuating unit 26.

The measurement system 30 of Figure 2 further comprises a data processing device 33 configurable to determine the condition of the gap adjustment mechanism based on the information describing the position of the processing element moved by the at least one actuating unit and the information describing the position of the at least one actuating unit. Referring to the example of the processing device 1 shown in Figure 1, the data processing device 33 is configured to determine the condition CON of the gap adjustment mechanism 20 based on the information describing the position PO9 of the stator 9 moved by the at least one actuating unit 23, 26 and the information describing the position PO23 of the first actuating unit 23 or the information describing the position PO26 of the second actuating unit 26.

In case of the measurement system 30 comprising two pieces of the second measuring devices 32, both the information describing the position PO23 of the first actuating unit 23 and the information describing the position PO26 of the second actuating unit 26 may be applied for determining the condition of the gap adjustment mechanism 20.

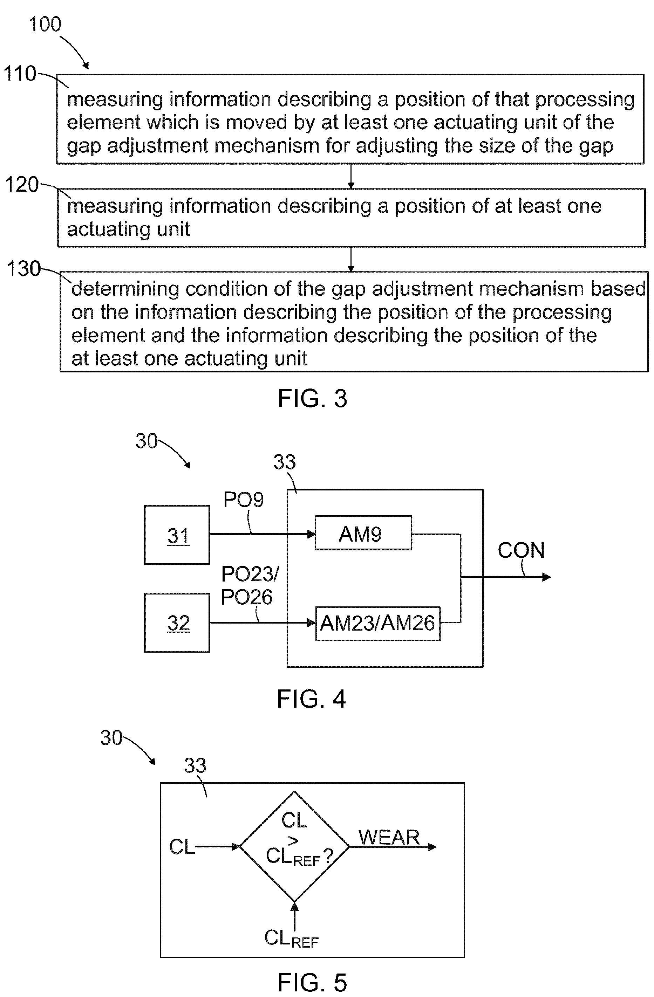

Figure 3 shows schematically a respective method 100 for monitoring a condition of a gap adjustment mechanism of a processing device. The method 100 comprises measuring 110 information describing a position of that processing element which is moved by at least one actuating unit of the gap adjustment mechanism for adjusting the size of the gap. The information describing the position of the processing element is thus measured 110 as a response to the operation of the at least one processing unit to move the processing element for adjusting the size of the blade gap.

The method 100 further comprises measuring 120 information describing a position of the at least one actuating unit as a response to the operation of the at least one processing unit to move the processing element for adjusting the size of the blade gap and determining 130 the condition of the gap adjustment mechanism based on the information describing the position of the processing element and the information describing the position of the at least one actuating unit.

The idea of the solution is to compare, as a response to the operation of the at least one actuating unit to move the processing element coupled to the at least one actuating unit for adjusting the size of the gap, the information describing the position of the processing element intended to be moved and the information describing the position of the at least one actuating unit. In a properly functioning gap adjustment mechanism, a specific position of the at least one actuating unit should correspond to a specific position of the processing element intended to be moved by the at least one actuating unit. Any deviation between those positions may indicate a failure in the operation of the gap adjustment mechanism.

According to an embodiment of the measurement system 30, as shown schematically in Figure 4, the data processing device 33 is configurable to determine, based on the information describing the position of the processing element, an amount of movement of the processing element. Referring to Figure 4 in view of the example of the processing device 1 shown in Figure 1, the data processing device 33 is configured to determine, based on the information describing the position PO9 of the stator 9, an amount of movement AM9 of the stator 9, when the stator 9 is intended to be moved by the at least one actuating unit 23, 26 for adjusting the size of the gap 10 between the rotor 6 and the stator 9.

Furthermore, according to the embodiment in Figure 4, the data processing device 33 is configurable to determine, based on the information describing the position of the at least one actuating unit, an amount of movement of the at least one actuating unit. Referring again to the example of the processing device 1 shown in Figure 1, the data processing device 33 is configured to determine, based on the information describing the position PO23 of the first actuating unit 23 or based on the information describing the position PO26 of the second actuating unit 26, an amount of movement AM23, AM26 of the respective actuating unit 23, 26. In case of the measurement system 30 comprising two pieces of the second measuring devices 32, the data processing device 33 may be configured to determine both the amount of movement AM23 of the first actuating unit 23 and the amount of movement AM26 of the second actuating unit 26.

Additionally, according to the embodiment in Figure 4, the data processing device 33 is configurable to determine the condition of the gap adjustment mechanism based on the amount of movement of the processing element and the amount of movement of the at least one actuating unit. Still referring to the example of the processing device 1 shown in Figure 1, the data processing device 33 is configured to determine the condition CON of the gap adjustment mechanism 20 based on the amount of movement AM9 of the stator 9 and based on the amount of movement AM23 of the first actuating unit 23 and/or the amount of movement AM26 of the second actuating unit 26.

In the embodiment of Figure 4, as a response to the operation of the at least one actuating unit to move the processing element coupled to the at least one actuating unit for adjusting the size of the gap, the amount of movement of the processing element moved by the at least one actuating unit is compared to the amount of movement of the at least one actuating unit. In a properly functioning gap adjustment mechanism, a specific amount of movement of the at least one actuating unit should provide a specific amount of movement of the processing element. Any deviation between those movements may indicate a failure in the operation of the gap adjustment mechanism.

As already shortly discussed above, the condition of the gap adjustment mechanism may indicate a clearance appearing in the gap adjustment mechanism. The clearance, in turn, is a measure for the wear of the gap adjustment mechanism. Any mechanical system typically has some clearance, but any extra clearance may deteriorate the operation of the system.

Therefore, according to an embodiment, the condition CON of the gap adjustment mechanism is arranged to indicate a clearance CL in the gap adjustment mechanism 20, and the data processing device 33 is configurable to comprise at least one reference value CL_{REF} for the size of the clearance CL in the gap adjustment mechanism 20, and to compare the determined clearance CL to the at least reference value CL_{REF} for determining wear of the gap adjustment mechanism 20.

Figure 5 shows schematically a detail of an embodiment of the measurement system like that for monitoring a condition of a gap adjustment mechanism of a processing device. In the embodiment of Figure 5, the data processing device 33 is configured to compare the determined condition of the gap adjustment mechanism 20, i.e., the determined clearance CL, to the at least one reference value CL_{REF} for the size of the clearance CL for determining wear of the gap adjustment mechanism 20.

According to an embodiment, the reference value CL_{REF} is set to zero, i.e., 0. According to this embodiment, any clearance CL in the gap adjustment mechanism 20 is interpreted to indicate wear in the gap adjustment mechanism 20.

According to an embodiment, the reference value CL_{REF} is set to correspond to a clearance in the gap adjustment mechanism 20 when an unused gap adjustment mechanism 20 is deployed. According to this embodiment, if the determined clearance CL is higher than the reference value CL_{REF}, extra clearance has appeared in the gap adjustment mechanism 20. This extra clearance indicates wear in the gap adjustment mechanism 20.

According to an embodiment, the data processing device 33 is configured to determine a difference between the determined clearance CL and the at least one reference value CL_{REF} set for the clearance. This difference then indicates the amount of clearance, or the amount of extra clearance in the gap adjustment mechanism 20 and is a measure for amount of wear in the gap adjustment mechanism 20.

The wear of the gap adjustment mechanism 20 may be used as an indicator for future maintenance operations to be taken for the gap adjustment mechanism 20.

A parameter indicating the wear of the gap adjustment mechanism 20, such as an amount of the clearance or an amount of the extra clearance, may also be used as a control parameter in the adjustment of the size of the gap 10. In that case, the parameter indicating the wear of the gap adjustment mechanism 20 may be used as a parameter to compensate errors in the adjustment of the size of the gap 10 which originate from the wear, such as the clearance, in the gap adjustment mechanism 20.

As discussed above, another factor relating to the condition of the gap adjustment mechanism 20 may be the ability of the gap adjustment mechanism 20 to operate, i.e., whether the gap adjustment mechanism 20 can at all move the processing element for adjusting the size of the gap 10. If an intended operation of the gap adjustment mechanism 20 does not cause any movement of the processing element to be moved for adjusting the size of the gap 10, this may be an indication of a mechanical or an electrical failure in the gap adjustment mechanism 20. In case of the first actuating unit 23, there may be for example an electrical failure in the motor 24, or a mechanical failure in the gear box 25 or in couplings between the components in the gap adjustment mechanism 20. In case of the second actuating unit 26, there may be for example a mechanical failure in couplings between the components in the gap adjustment mechanism 20.

According to an embodiment, the first measuring device 31 is a position sensor to measure information describing the position of the processing element intended to be moved for adjusting the size of the gap 10. According to an embodiment, the first measuring device 31 is configured to measure information describing a distance between the first measuring device 31 and the said processing element. Referring to the example of Figure 1, the first measuring device 31 may be arranged for example at the first end 2a of the frame 2 of the processing device 1 inside the chamber 5 of the processing device 1, whereby the first measuring device 31 is configured to measure information describing a distance between the first measuring device and the backing plate 9b of the stator 9. The position sensor may be any kind of distance sensor preferably with a submillimetre accuracy. Some examples of applicable position sensors are optical sensors, such as laser sensors, eddy current sensors, and mechanical contact sensors.

According to an embodiment, the second measuring device 32 is a position sensor to measure information describing a position of the at least one actuating unit. According to an embodiment, the second measuring device 32 is configured to measure information describing a rotational position of the actuating unit. Referring to the example of Figure 1 and the first actuating unit 23 therein, there may be at least one second measuring device 32 to measure a rotational position of the at least one of the shaft 24a of the electric motor 24 and the shaft 25a of the gear box 25. In that case, the at least one second measuring device 32 is configured to measure information describing a position of the shaft 24a of the electric motor 24 and/or the shaft 25a of the gear box 25 in its direction of rotation.

Additionally, or alternatively, referring to the example of Figure 1 and the second actuating unit 26 therein, there may be at least one second measuring device 32 to measure a rotational position of the at least one of the adjustment wheel 27 and the shaft 27a of the adjustment wheel 27. In that case, the at least one second measuring device 32 is configured to measure information describing a position of the adjustment wheel 27 and/or the shaft 27a of the adjustment wheel 27 in its direction of rotation.

The position sensor to measure information describing the position of the at least one actuating unit may be an angle sensor, such as an absolute angle sensor.

According to an embodiment, the second measuring device 32 is a position sensor to measure information describing the position of the coupling element 21. In that case, information describing the position of the coupling element 21 is considered as information describing a position of the actuating unit 23, 26. In this case, the second measuring device 32 may be configured to measure a movement of the coupling element 21. Referring to the example of Figure 1, the second measuring device 32 may be arranged for example inside the casing 22 of the coupling element 21. Also herein, the position sensor may be any kind of distance sensor preferably with a submillimetre accuracy. Some examples of applicable position sensors are optical sensors, such as laser sensors, eddy current sensors, and mechanical contact sensors.

The solution disclosed provides a simple way to monitor the condition of the gap adjustment mechanism. The solution provides that the condition of the gap adjustment mechanism may be monitored on-line, i.e., during the operation of the processing device. Additionally, the solution may be applied for monitoring the condition of the gap adjustment mechanism at a shutdown of the processing device, when the processing device does not operate.

It will be obvious to a person skilled in the art that, as the technology advances, the inventive concept can be implemented in various ways. The invention and its embodiments are not limited to the examples described above but may vary within the scope of the claims.

## Claims

1. A measurement system for monitoring a condition of a gap adjustment mechanism of a processing device, which processing device comprises oppositely positioned processing elements with a gap between them, and which measurement system comprises
a first measuring device to measure information describing a position of that processing element which is moved by at least one actuating unit of the gap adjustment mechanism for adjusting the size of the gap,
at least one second measuring device to measure information describing a position of the at least one actuating unit, and
a data processing device configurable to determine the condition of the gap adjustment mechanism based on the information describing the position of the processing element and the information describing the position of the at least one actuating unit.

2. A measurement system as claimed in claim 1, wherein the data processing device is configurable
to determine, based on the information describing the position of the processing element, an amount of movement of the processing element,
to determine, based on the information describing the position of the at least one actuating unit, an amount of movement of the at least one actuating unit, and
to determine the condition of the gap adjustment mechanism based on the amount of movement of the processing element and the amount of movement of the at least one actuating unit.

3. A measurement system as claimed in claim 1 or 2, wherein the condition of the gap adjustment mechanism is arranged to indicate a clearance in the gap adjustment mechanism and the data processing device is configurable
to comprise at least one reference value for the size of the clearance in the gap adjustment mechanism, and
to compare the determined clearance to the at least reference value for determining wear of the gap adjustment mechanism.

4. A measurement system as claimed in any one of the preceding claims, wherein the gap adjustment mechanism comprises a coupling element coupled to the processing element intended to be moved for adjusting the size of the gap, and
the actuating unit is coupled to the coupling element to operate the coupling element to move the processing element for adjusting the size of the blade gap.

5. A measurement system as claimed in any one of the preceding claims, wherein the first measuring device is a position sensor to measure information describing a distance between the sensor and the processing element intended to be moved for adjusting the size of the blade gap.

6. A measurement system as claimed in claim 5, wherein the position sensor is a non-contact position sensor.

7. A measurement system as claimed in any one of the preceding claims, wherein
at least one actuating unit comprises a manually operable adjustment wheel, and wherein
the second measuring device is configured to measure a position of the adjustment wheel.

8. A measurement system as claimed in any one of the preceding claims, wherein
at least one actuating unit comprises an electric motor and a gearing coupled to the electric motor, and wherein
the second measuring device is configured to measure a position of at least one of a shaft of the electric motor and a shaft of the gearing.

9. A measurement system as claimed in any one of the preceding claims, wherein the second measuring device is an angle sensor.

10. A measurement system as claimed in any one of the preceding claims, wherein the processing device is a refiner, or a disperger, or a deflaker.

11. A method for monitoring a condition of a gap adjustment mechanism of a processing device, which processing device comprises oppositely positioned processing elements with a gap between them, and which method comprises
measuring information describing a position of that processing element which is moved by at least one actuating unit of the gap adjustment mechanism for adjusting the size of the gap,
measuring information describing a position of the at least one actuating unit, and
determining the condition of the gap adjustment mechanism based on the information describing the position of the processing element and the information describing the position of the at least one actuating unit.

12. A method as claimed in claim 11, comprising
determining, based on the information describing the position of the processing element, an amount of movement of the processing element,
determining, based on the information describing the position of the at least one actuating unit, an amount of movement of the at least one actuating unit, and
determining the condition of the gap adjustment mechanism based on the amount of movement of the processing element and the amount of movement of the at least one actuating unit.

13. A method as claimed in claim 11 or 12, wherein the condition of the gap adjustment mechanism indicates a clearance in the gap adjustment mechanism and wherein the method further comprises
setting at least one reference value for the size of the clearance in the gap adjustment mechanism, and
comparing the determined clearance to the at least reference value for determining wear of the gap adjustment mechanism.

14. A method as claimed in any one of claims 11 to 13, wherein the information describing the position of the processing element is measured with a first measuring device configured to measure information describing a distance between the first measuring device and the processing element intended to be moved for adjusting the size of the gap.

15. A method as claimed in any one of claims 11 to 14, wherein
at least one actuating unit comprises an electric motor and a gearing coupled to the electric motor, and wherein
the information describing the position of the actuating unit is measured with a second measuring device configured to measure a position of at least one of a shaft of the electric motor and a shaft of the gearing.
